(19) **Europäisches Patentamt**
**European Patent Office**
**Office européen des brevets**

(11) **EP 3 341 767 B1**

(12) **EUROPEAN PATENT SPECIFICATION**

(45) Date of publication and mention
of the grant of the patent:
**07.04.2021 Bulletin 2021/14**

(51) Int Cl.:
***G01V 3/38*** *(2006.01)*      ***G01V 99/00*** *(2009.01)*

(21) Application number: **15902373.8**

(86) International application number:
**PCT/NO2015/050147**

(22) Date of filing: **27.08.2015**

(87) International publication number:
**WO 2017/034410 (02.03.2017 Gazette 2017/09)**

(54) **DATA-DRIVEN FOCUSED INVERSIONS**

DATENGESTEUERTE FOKUSSIERTE INVERSIONEN

INVERSIONS FOCALISÉES COMMANDÉES PAR DONNÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**04.07.2018 Bulletin 2018/27**

(73) Proprietor: **Equinor Energy AS
4035 Stavanger (NO)**

(72) Inventors:
• **NGUYEN, Anh Kiet
7026 Trondheim (NO)**
• **MAAO, Frank Agnar
7022 Trondheim (NO)**
• **WIIK, Torgeir
1430 As (NO)**
• **NORDSKAG, Janniche Iren
7350 Buvika (NO)**
• **CAUSSE, Emmanuel
7030 Trondheim (NO)**

(74) Representative: **White, Duncan Rohan
Marks & Clerk LLP
Fletcher House (2nd Floor)
Heatley Road
The Oxford Science Park
Oxford OX4 4GE (GB)**

(56) References cited:
**WO-A1-2014/000758      US-A1- 2010 198 519
US-A1- 2012 130 641      US-A1- 2012 209 525
US-A1- 2013 258 810      US-A1- 2014 029 383**

• **R-É PLESSIX ET AL: "Resistivity imaging with controlled-source electromagnetic data: depth and data weighting", INVERSE PROBLEMS, vol. 24, no. 3, 23 May 2008 (2008-05-23), page 034012, XP055568745, GB ISSN: 0266-5611, DOI: 10.1088/0266-5611/24/3/034012**
• **GREGORY A NEWMAN ET AL: "Solution accelerators for large-scale three-dimensional electromagnetic inverse problems", INVERSE PROBLEMS, vol. 20, no. 6, 9 November 2004 (2004-11-09), pages S151-S170, XP055568753, GB ISSN: 0266-5611, DOI: 10.1088/0266-5611/20/6/S10**

**Description**

Field of the invention

The invention relates to geophysical exploration and data processing and more particularly to a method for optimising a physical property distribution model based on data acquired from geophysical exploration methods, such as for example controlled source electromagnetic or seismic surveying.

Background

Geophysical data acquired from a subsurface region via traditional acquisition methods, such as for example, seismic or CSEM etc. surveying, can be used to obtain information about the distribution of a physical property in a subsurface region, as long as there is a mathematical relationship between the acquired data and the physical property one wishes to study. Using the acquired data and prior knowledge about the subsurface region, models can be generated, which characterise the distribution of the physical property. In this terminology, 'models' refer to the quantity being estimated. Inversion involves optimisation of the generated model, in order to determine the distribution of the property that explains the observed data.

The inversion problem, i.e. inverting model parameters from measured data sets, is nearly always an underdetermined, non-unique and non-linear problem (Tarantola, A. Inverse Problem Theory, Elsevier, New York 1987; Tarantola, A. Inverse Problem Theory and Methods for Model Parameter Estimation, Society for Industrial and Applied Mathematics 2005, and Zhdanov, M. S. Geophysical Inverse Theory and Regularization Problems, Elsevier 2002). The measured data do not provide enough information to ensure a unique solution at the desired resolution. Furthermore, measured data are also always contaminated with noise, inaccuracies and errors. Finally, implementations of the forward modelling operators, needed by the inversion engines, have always limited accuracy, since they are based on assumptions for practical and computational reasons. To obtain a solution one usually introduces artificial constrains and regularizations on the model parameters to stabilize the inversion problem (Tarantola, 2005 and Zhdanov 2002). The assumptions behind these constraints and regularizations are typically inaccurate.

The resulting final inverted models are therefore a trade-off between all these limitations, inaccuracies and errors. Practically, the inversion process always ends up in an attraction basin with a corresponding local minimum which favours some parts and aspects of the inverted model, at the expense of other parts and aspects of the model. Which attraction basin and the corresponding local minimum an inversion-run actually ends up in depends on the initial model, the regularization parameters, the included data points, the weight of the individual data points and the optimization algorithm used. The outcome of this fight between the different inversion driver forces is difficult to control without adding very strong assumptions/constraints which may cause severe artefacts in the inversion results if the assumptions are inaccurate.

One often wishes to have certain parts and aspects of the model to be reconstructed as accurately as possible. The cost of less accurate reconstruction of other less important parts/aspects of the model is then acceptable. Usually, the size of the target under investigation is very small compared to the entire model to be inverted. Correspondingly, the number of data points that are mainly sensitive to the large model background completely dominate over the few data points that are actually sensitive to the target. The target responses are therefore often too weak to compete with the other much stronger inversion driving forces, which leads to poorly imaged targets and fairly well imaged background.

As mentioned above, one conventionally uses constraints and regularization to focus the inversion search space and outcome (Tarantola and Zhdanov 2002), e.g. one encourages the inversion engine to promote certain aspects of the inverted model, such as smoothness, dense anomaly, low / high values in certain parts of the model (Tarantola and Zhdanov 2002). Henceforth, we use the term regularization to denote both constraints and regularization. This conventional approach is a model driven focused inversion (MDFI): it applies directly to the properties of the model. The problems with such model driven regularizations are that the inverted models are forced to contain the properties demanded by the regularization, regardless whether those properties are present in the true models or not.

The model driven focused inversion (MDFI) approach can be illustrated as follows. Let the inversion / optimization problem be to find a M-dimensional model vector $\vec{m}$ that minimizes the following misfit functional

$$\varepsilon(\vec{m}) = \Delta\overleftarrow{d}\,\overleftrightarrow{C}^{-1}\,\Delta\vec{d} + \lambda\,r(\vec{m}) \qquad \text{Eq. 1}$$

Here, the data residual $\Delta\vec{d} = \vec{d} - \vec{d}^s(\vec{m})$, where $\vec{d}$ is a real or complex N-dimensional vector representing the measured data, while $\vec{d}^s(\vec{m})$ is the forward modelled data for model $\vec{m}$. The reversed vector sign, $\overleftarrow{d}$, denotes the conjugate transpose. The data covariance matrix $\overleftrightarrow{C}$ describes the data errors and their correlations. Conventionally, $\overleftrightarrow{C}$ is approx-

imated by a diagonal matrix containing the data variances. A diagonal $\overleftrightarrow{C}$ means that all data points are uncorrelated. Examples of conventional $\overleftrightarrow{C}$ used in geophysical inversions may e.g. be found in (Morten, J. P., Bjørke, A. K., Støren T. (2009) CSEM data uncertainty analysis for 3D inversion, SEG Expanded Abstracts 28, 724).

The regularization misfit functional $r(\vec{m})$ depends only on the model parameters. $\lambda$ is a real scalar used to control the strength of the model regularization term. Typically, one uses $\lambda r(\vec{m})$ to stabilize the inversion problem and to control the inversion flow, i.e. forcing / encouraging the inverted models to have certain properties e.g. smoothness, sharpness, parameters kept within bounds, vicinity to some a priory model, etc. (Tarantola, 2005 and Zhdanov 2002).

R-E Plessix et. al., "Resistivity imaging with controlled-source electromagnetic data: depth and data weighting", Inverse problems 24 (23 May 2008) describes some computational aspects of resistivity imaging by inversion of offshore controlled-source electromagnetic data. The classic approach to imaging is adopted by formulating it as an inverse problem. A weighted least-squares functional measures the misfit between synthetic and observed data.

Summary

A data driven focused inversion (DDFI) method according to claims 1 or 6 is presented which encourages the inversion optimizer to focus more on some particular properties, parameters, regions of the inverted model at the expense of other properties, parameters and regions. Different from MDFI, DDFI does not force the inverted models to contain the properties under focus if they are not present in the data.

Drawings

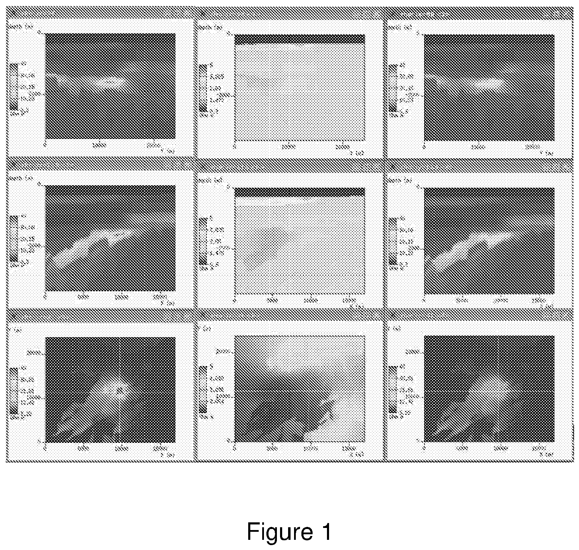

Figure 1      shows vertical ($R_v$) and horizontal ($R_H$) resistivity anomalies for first and second forward models.

Figure 2      shows electric field amplitude ($E_x$, solid lines), phase (points) and the noise estimate for an azimuth receiver.

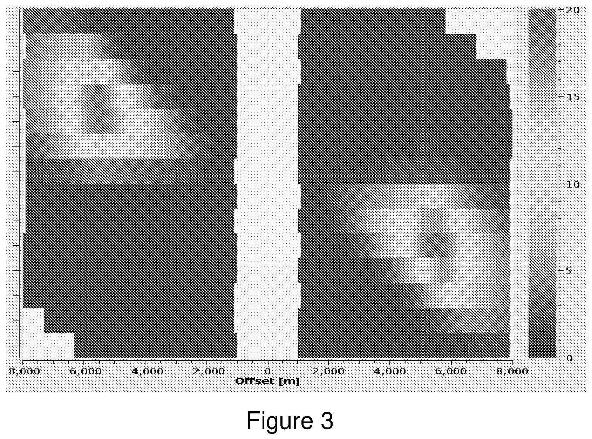

Figure 3      shows the diagonal of focusing matrix $\overleftrightarrow{F}$ with exponent $n$ = 1/2 for the inline component $E_x$ for one towline and *f=1Hz*

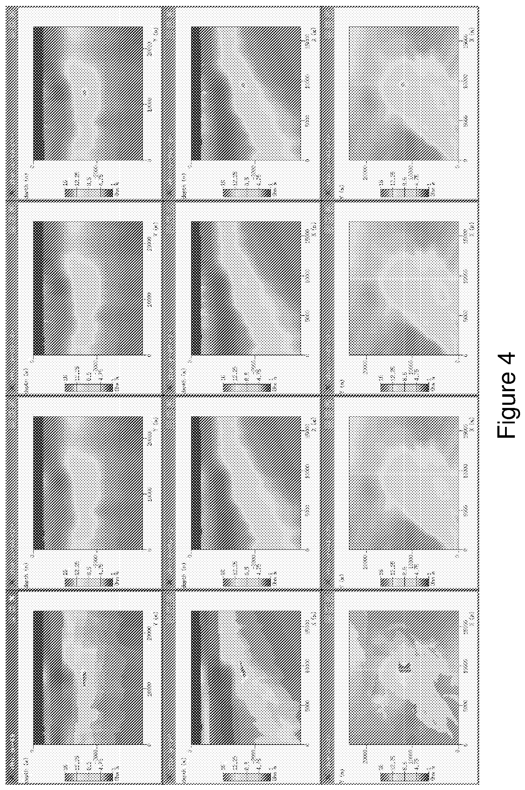

Figure 4      shows the true model T, initial model C, $\alpha$ = 0 inverted and $\alpha$ = 20 inverted vertical resistivity models

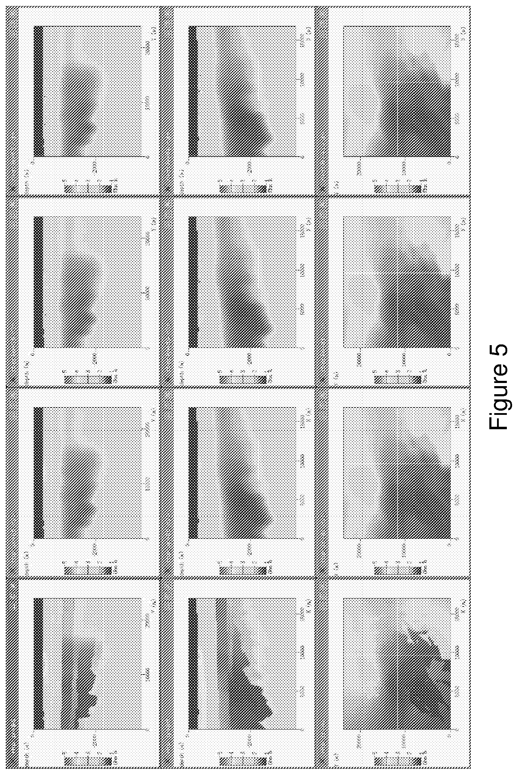

Figure 5      shows the true model T, initial model C, $\alpha$ = 0 inverted and $\alpha$ = 20 inverted horizontal resistivity models

Figure 6      illustrates the inverted vertical resistivity models for true model B, initial model C, inverted with $\alpha$ = 0 and $\alpha$ = 20

Figure 7      shows the inverted vertical resistivity models for initial model C, inverted with $\alpha$ = 0, $\alpha$ = 5 and $\alpha$ = 20

Figure 8      shows vertical resistivity models for true model T, initial model D, inverted with $\alpha$ = 0 and $\alpha$ = 5

Figure 9      shows vertical resistivity models for true model T, initial model E, inverted $\alpha$ = 0 and $\alpha$ = 20

Figure 10      shows a flow chart of an exemplary method

Figure 11      illustrates schematically in a block diagram an exemplary computer device.

Figure 12      is a schematic of a computer system for implementing one or more embodiments of the invention.

Detailed description

The method in accordance with this invention implements a geophysical data processing technique to generate a physical property distribution model of a subsurface region. Geophysical data acquired from geophysical surveys and prior knowledge about the subsurface region are used to generate a model which characterises the distribution of a physical property that produced the obtained data. Some data points are highly sensitive towards certain parameters, properties regions / parts of the model. By increasing the weight of these data points during the inversion process, a more accurate model of the physical property distribution can be achieved, as for example properties which are not present in the data will not be part of the inverted model.

According to the invention, the inversion consists of adding a new term to the covariance matrix to encourage the inversion engine to focus its efforts on minimizing the misfit of selected data residuals that are highly sensitive towards certain parameters, properties, regions/parts of the model. Henceforth, we will use the term target to denote the wanted parameters, properties or regions/parts of the model that we wish to study. In a preferred embodiment, we introduce a modified covariance matrix defined as

$$\overleftrightarrow{\mathbb{C}}^{-1} = \overleftrightarrow{C}^{-1}(\overleftrightarrow{1} + \alpha\overleftrightarrow{F}) \qquad\qquad \text{Eq. 2}$$

Here, $\overleftrightarrow{\mathbb{C}}$ is the modified covariance matrix, 1 is the identity matrix, $\overleftrightarrow{F}$ is the focusing matrix and $\alpha$ is a constant

used to control the focusing strength. To achieve focusing towards the target, $\alpha\overleftrightarrow{F}$ should be defined to be small/zero for the data points that are insensitive towards the target, and large for the data points that are sensitive towards the target. To achieve focusing towards the target, the data points which are most sensitive should have a higher weight (higher focus) than the data points which are insensitive to the target, given in the matrix $\alpha\overleftrightarrow{F}$.

In another embodiment of the present invention, one may also use the focusing matrix in the reversed sense, i.e. define $\alpha\overleftrightarrow{F}$ to be small for the data points that are sensitive towards certain parameters, properties, regions of the inverted model while large at the remaining data points. This would encourage the inversion engine to focus its minimizing efforts on the non-target part. One may use this reversed approach to reduce the effects of non-interesting parts of the model from the inversions. "Non-interesting" parts of the model could be for instance salt, basalt, pipelines, etc. depending on the objectives of the inversion study.

One way to construct $\overleftrightarrow{F}$ is through the scattered field. Here one performs two forward modellings: one for a background model $\vec{m}_B$, with modelled data $\vec{d}^s(\vec{m}_B)$, and one for a model $\vec{m}_T$ containing the same background model with a target added. The scattered field is then defined as

$$\vec{s} = \vec{d}^s(\vec{m}_T) - \vec{d}^s(\vec{m}_B) \qquad \text{Eq. 3}$$

$\vec{s}$ is thus the data response from the target only. $\overleftrightarrow{F}$ may then for example be defined as

$$\overleftrightarrow{F} = g\left(\overleftrightarrow{C}^{-1}\,\overleftrightarrow{A}(\vec{s})\right) \qquad \text{Eq. 4}$$

$g(\overleftrightarrow{A})$ is a user-supplied matrix function, e.g

$$g(\overleftrightarrow{X}) = \overleftrightarrow{X}^n \qquad \text{Eq. 5}$$

where $n$ is a user-supplied exponent. $\overleftrightarrow{A}(\vec{s})$ is a user-supplied matrix functional of the scattered field, for example

$$\overleftrightarrow{A}(\vec{s}) = diag(\vec{s}\vec{s}^{\,\leftarrow}) \qquad \text{Eq. 6}$$

where $\vec{s}\vec{s}$ denotes the outer product of $\vec{s}$ and the matrix function $diag()$ extracts out the diagonal matrix.

Note that the $\overleftrightarrow{C}^{-1}\,\overleftrightarrow{A}(\vec{s})$ form ensures the defocusing of noisy data points.

For diagonal $\overleftrightarrow{C}^{-1}$ and $\overleftrightarrow{F}$, the effect of Eq. 7 is very similar to increasing the weight of data points where the scattered field is strongest.

By way of an example, a synthetic data set can be used to illustrate the effectiveness of the present invention, and to show that the data-driven focused inversion method improves the inversion results around the target; the method is applied on inversion of a synthetic seabed logging controlled-source electromagnetic (CSEM) dataset.

Electromagnetic data consist of electric and magnetic fields: $[E_x, E_y, E_z]$ and $[H_x, H_y, H_z]$, respectively. The components in the electromagnetic field vector are, in the frequency domain, complex and depend on the source ($s$), receiver ($r$) and frequency ($f$), e.g. $E_x \rightarrow E_x(s, r, f)$.

Conventionally, the data covariance matrix used in CSEM inversions is assumed to be diagonal with the elements given by the data uncertainties, examples may be found in (Morten, 2009; Maaø, F. A. and Nguyen, A. K. Enhanced subsurface response for marine CSEM surveying, Geophysics, 75 no. 3, 7-10, 2010). Here, we define the variance for the different electromagnetic fields as:

$$|\Delta E_x|^2 = |\beta_1 E_x|^2 + |\beta_2 E_y|^2 + |\beta_3 E_z|^2 + |\eta_{E_x}|^2$$

$$|\Delta E_y|^2 = |\beta_2 E_x|^2 + |\beta_1 E_y|^2 + |\beta_3 E_z|^2 + |\eta_{E_y}|^2$$

$$|\Delta E_z|^2 = |\beta_3 E_x|^2 + |\beta_3 E_y|^2 + |\beta_1 E_z|^2 + |\eta_{E_z}|^2$$

$$|\Delta H_x|^2 = |\beta_1 H_x|^2 + |\beta_2 H_y|^2 + |\beta_3 H_z|^2 + \left|\eta_{H_x}\right|^2$$

$$\left|\Delta H_y\right|^2 = |\beta_2 H_x|^2 + |\beta_1 H_y|^2 + |\beta_3 H_z|^2 + \left|\eta_{H_y}\right|^2$$

$$|\Delta H_z|^2 = |\beta_3 H_x|^2 + |\beta_3 H_y|^2 + |\beta_1 H_z|^2 + \left|\eta_{H_z}\right|^2$$

where $\beta_1$ is the self-, and $\beta_2$ and $\beta_3$ are the cross-correlated multiplicative uncertainties between the field components. Furthermore, $\eta$ is the individual field's additive noise. Maao and Nguyen (2010) provide the reasoning behind and explanation of the multiplicative uncertainty and additive noise. So, a single $i$-(source, receiver, frequency) measurement provides up to six additional components to the data vector $d_i = [E_x^i, E_y^i, E_z^i, H_x^i, H_y^i, H_z^i]$ and the corresponding diagonal covariance matrix for the electric field part is then

$$\overleftrightarrow{C_E} = \begin{matrix} |\Delta E_x|^2 & 0 & 0 \\ 0 & |\Delta E_y|^2 & 0 \\ 0 & 0 & |\Delta E_z|^2 \end{matrix}$$

Similarly, for the magnetic field

$$\overleftrightarrow{C_H} = \begin{matrix} |\Delta H_x|^2 & 0 & 0 \\ 0 & |\Delta H_y|^2 & 0 \\ 0 & 0 & |\Delta H_z|^2 \end{matrix}$$

**Synthetic data example**

We will in this section show that the data driven focused inversion method works well for 3D anisotropic inversions on a synthetic, seabed logging, controlled-source electromagnetic dataset.

The synthetic model and the synthetic dataset are strongly inspired by measured data from a real survey. The synthetic model is created using real seismic horizons from the survey location. Resistivity values are extracted from a seismic-driven CSEM inversion (Nguyen, A. K., Kjøsnes Ø., Hansen J. 0.(2013) CSEM exploration in the Barents Sea, Part II - High resolution CSEM inversion, 75th Annual Conference and Exhibition, EAGE, Extended Abstracts, We0403) result of the real dataset. One of the figures shows slices of the true model (T) and the background (B) model. Model T has a vertical resistivity, $R_V$, anomaly in it; while the anomaly is not present in model B. This $R_V$ anomaly in the true model is the target for the inversion study. The horizontal resistivity model, $R_H$, is the same for both models T and B. The reason behind the lack of the anomaly in $R_H$ stems from the fact that thin horizontal resistive anomalies have virtually no effect on the CSEM data, so no $R_H$ anomaly was constructed in the seismic-driven CSEM inversion. We do not see the necessity of artificially adding an $R_H$ anomaly into the true model. The 3D forward modeling with the gridding *dx=dy=100m* and *dz=40m* is based on the finite difference time domain method (Maaø, F. A. (2007) Fast finite-difference time-domain modeling for marine-subsurface electromagnetic problems, Geophysics, 72, A19-23). Data is collected for the frequencies *f = 0.25, 0.5, 1Hz.* Bathymetry is accounted for in the modelling.

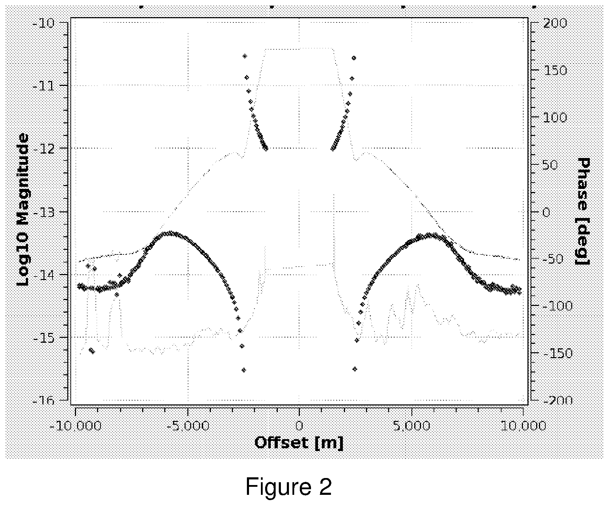

Navigations and orientations for the shots and receivers are taken from the survey data. For each synthetic data point, we add to it a complex number with a random phase and an amplitude given by the noise estimate for the corresponding real data point. In addition we distort the values of the receiver orientations by uniformly distributed random numbers between -3 and 3 degrees. Thus the noise levels, receiver rotation errors, navigation imperfections are all close to real acquisition uncertainties and conditions. A noise contaminated electric field for an azimuth line is shown in Figure 2. We see that the additive noise does visibly affect the data both in the amplitude and phase, in particular at offsets where magnetotellurics bursts occur.

To construct the target focused covariance matrix one needs to estimate the sensitivity of the individual data points towards the target. This can be achieved by comparing clean synthetic data from model T and model B

$$\vec{s} = \vec{d}^s(\vec{m}_T) - \vec{d}^s(\vec{m}_B)$$

The diagonal of the focusing matrix $\overleftrightarrow{F}$ with exponent $n$ = 1/2 for the inline component $E_x$ for one towline and $f$=1Hz is shown in one of the figures. We see that the target clearly projects its existence and information into a limited group of data points.

Inversion

The L-BFGS-B scheme (Zach, J. J., Bjørke, A. K., Støren, T., and Maaø, F. 3D inversion of marine CSEM data using a fast finite-difference time-domain forward code and approximate hessian-based optimization. SEG Expanded Abstracts 27, 614, 2008) was used to invert the synthetic datasets from model T and model B. No regularization is applied in this pixel based focused inversion. The initial model C is a smoothed and up-scaled version of model B with $dx$ = $dy$ = 150m and $dz$ = 40m. For the inversions, we employ the fields $E_x$ and $E_y$ and the frequencies $f$ = 0.25,0.5, 1Hz with the corresponding maximum absolute offsets of 10000, 9000, 8000m. The minimum offset is 1500m for all frequencies. Unless explicitly mentioned the final inversion results are taken from iteration 100.

One of the figures shows the true, initial model C, $\alpha$ = **0** inverted and $\alpha$ = **20** inverted vertical resistivity models. We see that the $\alpha$ = **0** inverted model contains an anomaly at the correct position. However, the reconstructed anomaly is rather weak with too low resistivities. Furthermore, we see that the $\alpha$ = **20** inverted model reconstructs the anomaly much better compared to the conventional inversion. The difference in the resolutions between the true model and inverted models stems from the fact that the true model is based on seismic-guided inversion while the inverted models here are pure CSEM data-driven pixel based inversions which have much lower resolutions compared to the seismic guided case.

One of the figures shows the true, initial model C, $\alpha$ = **0** inverted and $\alpha$ = **20** inverted horizontal resistivity models. We see that the inverted models are more or less identical and very similar to the initial model. Even the receiver imprints are more or less identical. Most probably, they are the imprints of the introduced errors in the receiver orientation. Note again that introduction of a thin high resistive anomaly in the true horizontal model will not affect the data and thereby the inversion results.

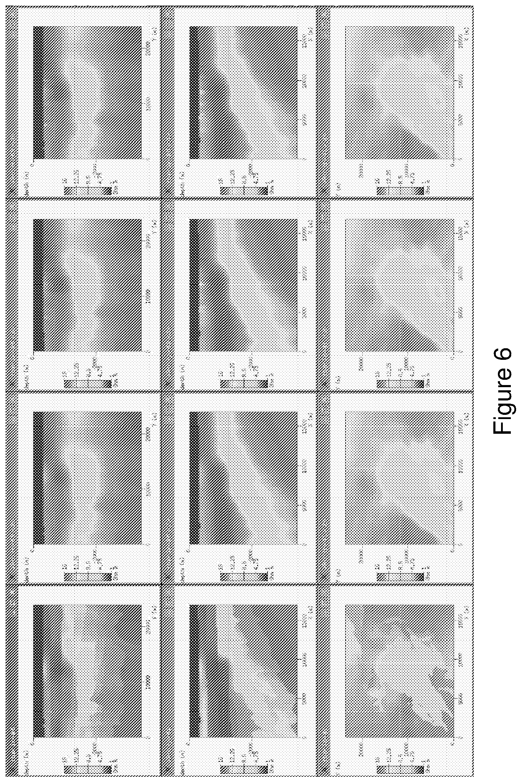

A natural question to ask is whether anomaly focused weights may introduce artificial anomalies in the inversion result even when there are no such anomalies in the input data. Figure 6 shows the inverted models for $\alpha$ = 0 and $\alpha$ = 20 from the dataset B. Here the true model has no resistivity anomaly. We see that all inversions correctly predict that there is no resistivity anomaly in the model. Thus, one may conclude that anomaly focused weights do not artificially introduce resistivity anomalies that do not exist in the input data.

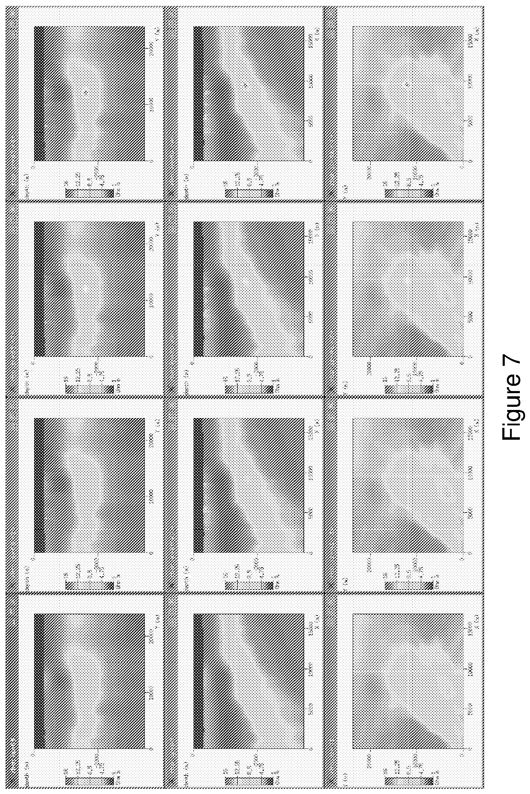

Figure 7 shows the inverted vertical resistivity models for $\alpha$ = 0, $\alpha$ = 5 and $\alpha$ = 20. It can be seen that increasing focusing also increases the definition of the resistivity anomaly in the inverted model.

Another natural question is how would significantly wrong initial models affect the inversion results when anomaly focused weights is applied? We study this problem by performing inversions with the initial models D and E which are distorted version of the "correct" initial model C. The initial model D is a modified version of model C with $R_V$ -> $R_V \times 0.8$ and $R_H \rightarrow R_H \times 0.8$.

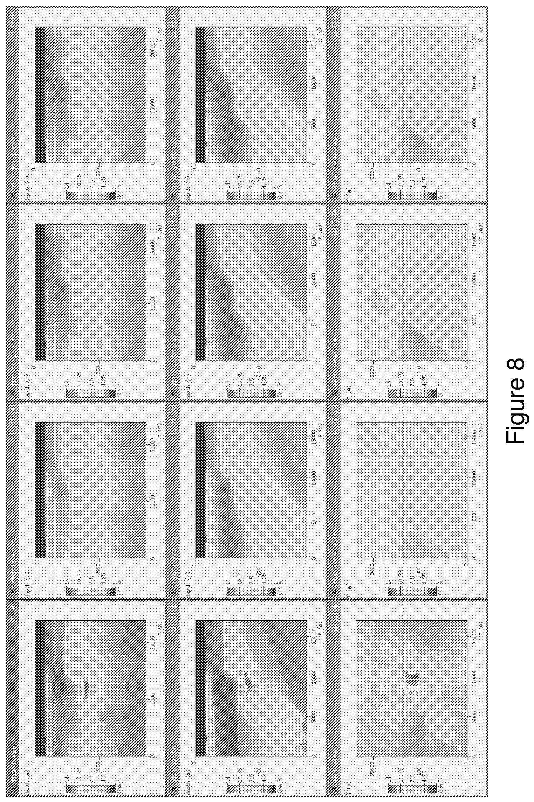

One of the figures shows the vertical resistivity models for the cases: true, initial model D, inverted with $\alpha$=0 and inverted with $\alpha$=5. We see that the resistivity anomaly is again much better restored when focused weights were used in the inversion compared to conventional unfocused weights. The inverted horizontal resistivity models corresponding to the models shown in Figure 8 are more or less identical.

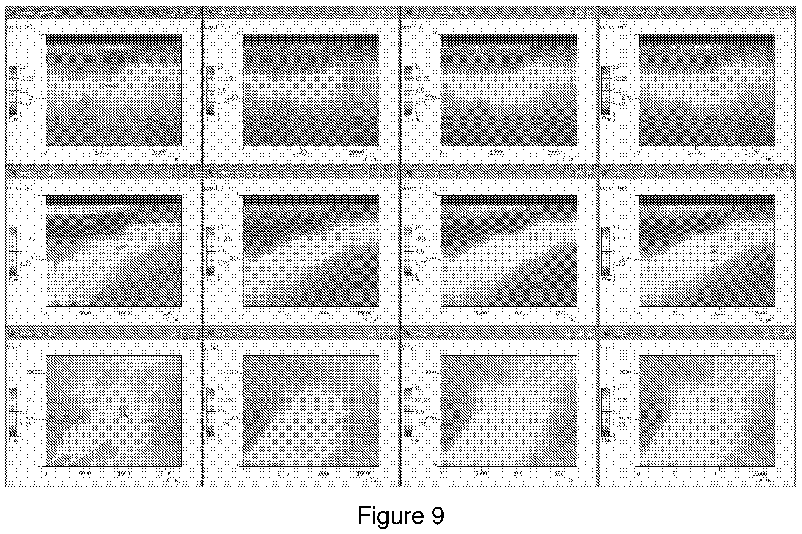

Figure 9 shows the vertical resistivity models for the cases: true, initial model E, inverted with $\alpha$=0 and inverted with $\alpha$=5. The initial model E is a modified version of model C with $R_V \rightarrow R_V \times 1.2$ and $R_H \rightarrow R_H \times 1.2$. We see that the resistivity anomaly is again much better restored when focused weights were used in the inversion compared to conventional unfocused weights. The inverted horizontal resistivity models corresponding to the models shown in Figure 8 are more or less identical.

Thus, one may conclude that significantly wrong initial models would not degrade the effect of anomaly focused weights.

We have shown above that the data-driven focused inversion (DDFI) method works well on CSEM inversion. Different from the conventional model driven focused inversion (MDFI) method, DDFI does not enforce certain properties into the inverted models if the presence of these properties are not present in the data.

Inversions of measured data often provide results with lower resolution than needed for interpretation or estimated parameters have higher uncertainties than required, especially for a small target region or a small set of important parameters. Data-driven focused inversions put more effort on reducing the data residual for selected data points that are sensitive towards a user-defined target. Recall that the term target here means selected properties, parameters, regions of the model. The inversion results will therefore provide better definitions of the target, at the expense of a worse background which often is acceptable from a user point of view.

Inversions nearly always end up in a local minimum. Which minimum it ends up in depends on the initial model, the regularization, the optimizer algorithm. Model-driven focused inversions force the properties dictated by the regularization term into the inverted model, e.g. a smoothness regularization term will force the inverted model to be smooth, regardless of the measured data. In contrast to this, data-driven focused inversions only put more effort on reducing the data residual for selected data points. Thus, a focusing function for a target does not force the inverted models to contain the target, if no target response is to be found in the measured data. On the contrary, DDFI will in this case ensure that the inverted models do not contain the target, since the weighted data misfit will be too high. Thus DDFI increases the probability for the inversions to end up in local minima which ensure that properties of the target are accurately described.

Data-driven focused inversion, DDFI, will try to find models that minimize the data fit for selected data points that are sensitive towards the target, on the expense of other data points that are exclusively sensitive towards the background and not the target. This enables more accurate definition of the targets.

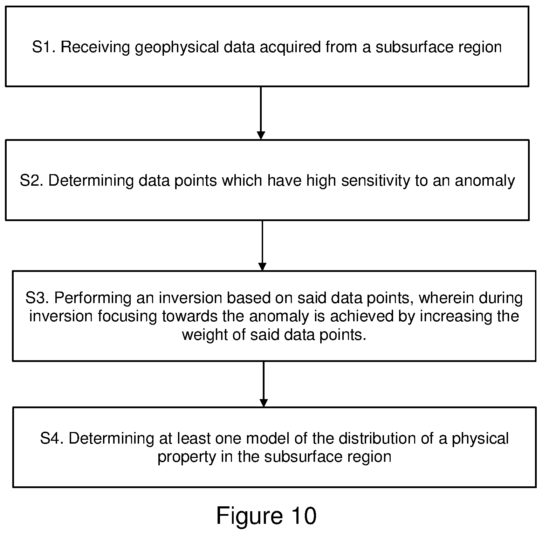

Figure 10 is a flow diagram showing exemplary steps according to the first embodiment. The following numbering corresponds to that of Figure 10:

S1. Receiving geophysical data acquired from a subsurface region.
S2. Determining data points which have high sensitivity to an anomaly.
S3. Performing an inversion based on said data points, wherein during inversion focusing towards the anomaly is achieved by increasing the weight of said data points.
S4. Determining at least one model of the distribution of a physical property in the subsurface region.

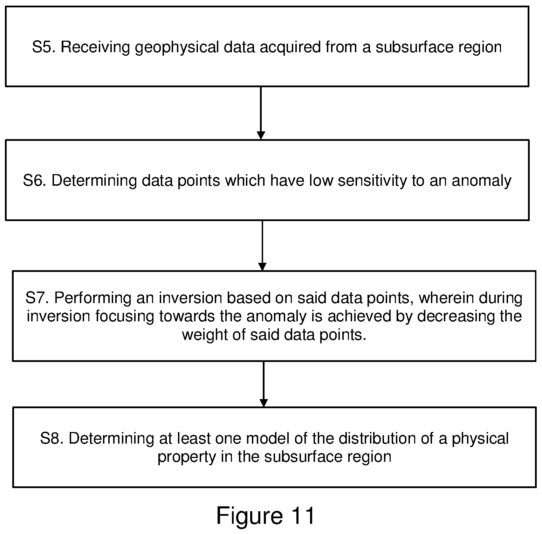

Figure 11 is a flow diagram showing exemplary steps according to the second embodiment. The following numbering corresponds to that of Figure 11:

S5. Receiving geophysical data acquired from a subsurface region.
S6. Determining data points which have low sensitivity to an anomaly.
S7. Performing an inversion based on said data points, wherein during inversion focusing towards the anomaly is achieved by decreasing the weight of said data points.
S8. Determining at least one model of the distribution of a physical property in the subsurface region

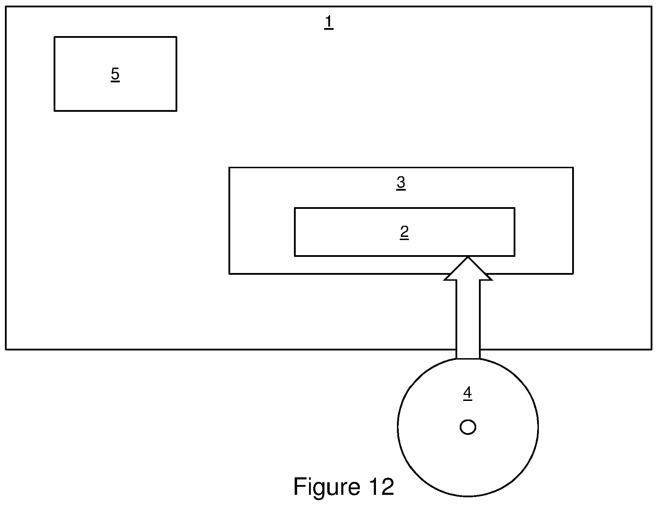

Referring to Figure 12, there is provided an exemplary computer device 1, which is capable of executing the method of processing geophysical data acquired from a subsurface region as described by the embodiments of the invention. The computer device may contain or be programmed by a computer program 2, which comprises computer readable instructions for processing geophysical data acquired from a subsurface region as described by the embodiments of the invention. The computer program 2 may be stored on a non-transitory computer readable medium in the form of a memory 3. The computer program 2 may be provided from an external source 4. The computer device 1 may include a display 5, which allows a user to visualise the determined model of the distribution of a physical property in the subsurface region.

## Claims

1. A computer-implemented method of processing geophysical data acquired from a subsurface region, the method comprising:

receiving geophysical data acquired from a subsurface region;
determining data points of the geophysical data which have high sensitivity to an anomaly, the anomaly representing an anomaly of the subsurface region;
performing an inversion based on said geophysical data, wherein during inversion focusing towards the anomaly is achieved by increasing the weight of said data points, wherein increasing the weight of data points is achieved by

defining a covariance matrix $\overset{\leftrightarrow}{C}{}^{-1}$ that is a function of $\alpha\overset{\leftrightarrow}{F}$, wherein $\overset{\leftrightarrow}{F}$ is a focusing matrix and $\alpha$ is a constant to control the focusing strength, and
increasing $\alpha\overset{\leftrightarrow}{F}$ for said data points,

wherein said data points are identified, and the focusing matrix $\overset{\leftrightarrow}{F}$ is constructed, by comparing simulated geophysical data generated by forward modelling of two models of the subsurface region, wherein the two models are identical except for the anomaly; and

determining from the inversion at least one model of the distribution of a physical property in the subsurface region.

2. The method of claim 1, wherein geophysical data can be any one of electromagnetic data, controlled source electromagnetic data, seismic data, gravity data, or electrical resistivity data.

3. The method of claim 1 or 2, wherein the covariance matrix is of the form:

$$\overleftrightarrow{\mathbb{C}}^{-1} = f(\overleftrightarrow{C}^{-1}, \alpha\overleftrightarrow{F})$$

4. The method according to any one of the preceding claims, wherein the covariance matrix is of the form:

$$\overleftrightarrow{\mathbb{C}}^{-1} = \overleftrightarrow{C}^{-1}(\overleftrightarrow{1} + \alpha\overleftrightarrow{F})$$

5. The method according to any one preceding claim, wherein the anomaly may be any one of parameters, properties or regions/parts of a model.

6. A computer-implemented method of processing geophysical data acquired from a subsurface region, the method comprising:

   receiving geophysical data acquired from the subsurface region;
   determining data points of the geophysical data which have low sensitivity towards an anomaly, the anomaly representing an anomaly of the subsurface region;
   performing an inversion based on said geophysical data, wherein during inversion focusing towards the anomaly is achieved by decreasing the weight of said data points, wherein decreasing the weight of data points is is achieved by

   defining a covariance matrix $\overleftrightarrow{\mathbb{C}}^{-1}$ that is a function of $\alpha\overleftrightarrow{F}$, wherein $\overleftrightarrow{F}$ is a focusing matrix and $\alpha$ is a constant to control the focusing strength, and
   decreasing $\alpha\overleftrightarrow{F}$ for said data points,

   wherein said data points are identified, and the focusing matrix $\overleftrightarrow{F}$ is constructed, by comparing simulated geophysical data generated by forward modelling of two models of the subsurface region, wherein the two models are identical except for the anomaly; and
   determining from the inversion at least one model of the distribution of physical properties in the subsurface region.

7. The method of claim 6, wherein geophysical data can be any one of electromagnetic data, controlled source electromagnetic data, seismic data, gravity data, or electrical resistivity data.

8. The method of claim 6 or 7, wherein the covariance matrix is of the form:

$$\overleftrightarrow{\mathbb{C}}^{-1} = f(\overleftrightarrow{C}^{-1}, \alpha\overleftrightarrow{F})$$

9. The method according to any one of claims 6 to 8, wherein the covariance matrix is of the form:

$$\overleftrightarrow{\mathbb{C}}^{-1} = \overleftrightarrow{C}^{-1}(\overleftrightarrow{1} + \alpha\overleftrightarrow{F})$$

10. The method according to any one of claims 5 to 9, wherein the anomaly may be any one of parameters, properties or regions/parts of a model.

11. A computer program comprising instructions which, when the program is executed by a computer, cause the computer to carry out the method of any one of claims 1 to 10.

**12.** A data processing apparatus comprising means for carrying out the method of any one of claims 1 to 10.

**13.** A computer-readable data carrier having stored thereon the computer program of claim 11.

**14.** Transmission across a network of a program as claimed in claim 11.


**Patentansprüche**

**1.** Computerimplementiertes Verfahren zum Verarbeiten von geophysikalischen Daten, die aus einer unterirdischen Region erfasst werden, wobei das Verfahren umfasst:

Empfangen von geophysikalischen Daten, die aus einer unterirdischen Region erfasst werden;
Bestimmen von Datenpunkten der geophysikalischen Daten, die eine hohe Empfindlichkeit für eine Anomalie aufweisen, wobei die Anomalie eine Anomalie der unterirdischen Region darstellt;
Durchführen einer Invertierung auf der Grundlage der geophysikalischen Daten, wobei während der Invertierung durch Erhöhen der Gewichtung der Datenpunkte eine Fokussierung in Richtung der Anomalie erreicht wird, wobei das Erhöhen der Gewichtung der Datenpunkte erreicht wird durch

Definieren einer Kovarianzmatrix $\overleftrightarrow{\mathbb{C}}^{-1}$, die eine Funktion von $\alpha\overleftrightarrow{F}$ ist, wobei $\overleftrightarrow{F}$ eine Fokussierungsmatrix ist und $\alpha$ eine Konstante ist, um die Fokussierungsstärke zu steuern, und
Erhöhen von $\alpha\overleftrightarrow{F}$ für die Datenpunkte,
wobei die Datenpunkte identifiziert werden und die Fokussierungsmatrix $\overleftrightarrow{F}$ konstruiert wird, indem simulierte geophysikalische Daten verglichen werden, die durch Vorwärtsmodellierung zweier Modelle der unterirdischen Region erzeugt werden, wobei die beiden Modelle bis auf die Anomalie identisch sind; und
Bestimmen mindestens eines Modells der Verteilung einer physikalischen Eigenschaft in der unterirdischen Region aus der Invertierung.

**2.** Verfahren nach Anspruch 1, wobei geophysikalische Daten irgendwelche von elektromagnetischen Daten, elektromagnetischen Daten einer gesteuerten Quelle, seismischen Daten, Schwerkraftdaten oder Daten des elektrischen Widerstands sein können.

**3.** Verfahren nach Anspruch 1 oder 2, wobei die Kovarianzmatrix die Form hat:

$$\overleftrightarrow{\mathbb{C}}^{-1} = f(\overleftrightarrow{\mathbb{C}}^{-1}, \alpha\overleftrightarrow{F})$$

**4.** Verfahren nach einem der vorhergehenden Ansprüche, wobei die Kovarianzmatrix die Form hat:

$$\overleftrightarrow{\mathbb{C}}^{-1} = \overleftrightarrow{\mathbb{C}}^{-1}(\overleftrightarrow{1} + \alpha\overleftrightarrow{F})$$

**5.** Verfahren nach einem der vorhergehenden Ansprüche, wobei die Anomalie eines von Parametern, Eigenschaften oder Regionen/Teilen eines Modells sein kann.

**6.** Computerimplementiertes Verfahren zum Verarbeiten von geophysikalischen Daten, die von einer unterirdischen Region erfasst werden, wobei das Verfahren umfasst:

Empfangen von geophysikalischen Daten, die aus der unterirdischen Region erfasst werden;
Bestimmen von Datenpunkten der geophysikalischen Daten, die eine geringe Empfindlichkeit gegenüber einer Anomalie aufweisen, wobei die Anomalie eine Anomalie der unterirdischen Region darstellt;
Durchführen einer Invertierung auf der Grundlage der geophysikalischen Daten, wobei während der Invertierung durch Verringern der Gewichtung der Datenpunkte eine Fokussierung in Richtung der Anomalie erreicht wird, wobei das Verringern der Gewichtung der Datenpunkte erreicht wird durch:

Definieren einer Kovarianzmatrix $\overleftrightarrow{\mathbb{C}}^{-1}$, die eine Funktion von $\alpha\overleftrightarrow{F}$ ist, wobei $\overleftrightarrow{F}$ eine Fokussierungsmatrix ist und $\alpha$ eine Konstante zur Steuerung der Fokussierungsstärke ist, und
Verringern von $\alpha\overleftrightarrow{F}$ für die Datenpunkte,

wobei die Datenpunkte identifiziert werden und die Fokussierungsmatrix $\overleftrightarrow{F}$ konstruiert wird, indem simulierte geophysikalische Daten verglichen werden, die durch Vorwärtsmodellierung zweier Modelle der unterirdischen Region erzeugt werden, wobei die beiden Modelle bis auf die Anomalie identisch sind; und Bestimmen mindestens eines Modells der Verteilung von physikalischen Eigenschaften in der unterirdischen Region aus der Invertierung.

**7.** Verfahren nach Anspruch 6, wobei geophysikalische Daten irgendwelche von elektromagnetischen Daten, elektromagnetischen Daten einer gesteuerten Quelle, seismischen Daten, Schwerkraftdaten oder Daten des elektrischen Widerstands sein können.

**8.** Verfahren nach Anspruch 6 oder 7, wobei die Kovarianzmatrix die Form hat:

$$\overleftrightarrow{\mathbb{C}}^{-1} = f(\overleftrightarrow{\mathbb{C}}^{-1}, \alpha\overleftrightarrow{F})$$

**9.** Verfahren nach einem der Ansprüche 6 bis 8, wobei die Kovarianzmatrix die Form hat:

$$\overleftrightarrow{\mathbb{C}}^{-1} = \overleftrightarrow{\mathbb{C}}^{-1}(\overleftrightarrow{1} + \alpha\overleftrightarrow{F})$$

**10.** Verfahren nach einem der Ansprüche 5 bis 9, wobei die Anomalie eines von Parametern, Eigenschaften oder Regionen/Teilen eines Modells sein kann.

**11.** Computerprogramm, das Anweisungen umfasst, die, wenn das Programm durch einen Computer ausgeführt wird, den Computer veranlassen, das Verfahren nach einem der Ansprüche 1 bis 10 auszuführen.

**12.** Datenverarbeitungsvorrichtung die Mittel zum Durchführen des Verfahrens nach einem der Ansprüche 1 bis 10 umfasst.

**13.** Computerlesbarer Datenträger, auf dem das Computerprogramm nach Anspruch 11 gespeichert ist.

**14.** Übertragung eines Programms nach Anspruch 11 über ein Netzwerk.

**Revendications**

**1.** Procédé, mis en œuvre par ordinateur, de traitement de données géophysiques qui sont acquises à partir d'une région souterraine, le procédé comprenant :

la réception de données géophysiques qui sont acquises à partir d'une région souterraine ;
la détermination de points de données des données géophysiques, lesquels présentent une sensibilité élevée à une anomalie, l'anomalie représentant une anomalie de la région souterraine ;
la réalisation d'une inversion sur la base desdites données géophysiques, dans lequel, pendant l'inversion, une focalisation vers l'anomalie est réalisée en augmentant le poids desdits points de données, dans lequel l'augmentation du poids de points de données est réalisée en

définissant une matrice de covariance $\overleftrightarrow{\mathbb{C}}^{-1}$ qui est une fonction de $\alpha\overleftrightarrow{F}$, où $\overleftrightarrow{F}$ est une matrice de focalisation et $\alpha$ est une constante pour commander l'intensité de focalisation , et en
augmentant $\alpha\overleftrightarrow{F}$ pour lesdits points de données ;
dans lequel lesdits points de données sont identifiés, et la matrice de focalisation F est construite, en comparant des données géophysiques simulées qui sont générées au moyen d'une modélisation progressive de deux modèles de la région souterraine, dans lequel les deux modèles sont identiques à l'exception de l'anomalie ; et
la détermination, à partir de l'inversion, d'au moins un modèle de la distribution d'une propriété physique dans la région souterraine.

**2.** Procédé selon la revendication 1, dans lequel les données géophysiques peuvent être de quelconques parmi des données électromagnétiques, des données électromagnétiques à source commandée, des données sismiques, des données de gravité ou des données de résistivité électrique

**3.** Procédé selon la revendication 1 ou 2, dans lequel la matrice de covariance est de la forme :

$$\overleftrightarrow{\mathbb{C}}^{-1} = f(\overleftrightarrow{\mathbb{C}}^{-1}, \alpha\overleftrightarrow{F})$$

**4.** Procédé selon l'une quelconque des revendications qui précèdent, dans lequel la matrice de covariance est de la forme :

$$\overleftrightarrow{\mathbb{C}}^{-1} = \overleftrightarrow{\mathbb{C}}^{-1}\left(\overleftrightarrow{1} + \alpha\overleftrightarrow{F}\right)$$

**5.** Procédé selon l'une quelconque des revendications qui précèdent, dans lequel l'anomalie peut être un quelconque parmi des paramètres, des propriétés ou des régions/parties d'un modèle.

**6.** Procédé, mis en œuvre par ordinateur, de traitement de données géophysiques qui sont acquises à partir d'une région souterraine, le procédé comprenant :

la réception de données géophysiques qui sont acquises à partir de la région souterraine ;
la détermination de points de données des données géophysiques, lesquels présentent une sensibilité faible à une anomalie, l'anomalie représentant une anomalie de la région souterraine ;
la réalisation d'une inversion sur la base desdites données géophysiques, dans lequel, pendant l'inversion, une focalisation vers l'anomalie est réalisée en diminuant le poids desdits points de données, dans lequel la diminution du poids de points de données est réalisée en

définissant une matrice de covariance $\overleftrightarrow{\mathbb{C}}^{-1}$ qui est une fonction de $\alpha\overleftrightarrow{F}$, où $\overleftrightarrow{F}$ est une matrice de focalisation et $\alpha$ est une constante pour commander l'intensité de focalisation ; et en
diminuant $\alpha\overleftrightarrow{F}$ pour lesdits points de données ;
dans lequel lesdits points de données sont identifiés, et la matrice de focalisation F est construite, en comparant des données géophysiques simulées qui sont générées au moyen d'une modélisation progressive de deux modèles de la région souterraine, dans lequel les deux modèles sont identiques à l'exception de l'anomalie ; et
la détermination, à partir de l'inversion, d'au moins un modèle de la distribution de propriétés physiques dans la région souterraine.

**7.** Procédé selon la revendication 6, dans lequel les données géophysiques peuvent être de quelconques parmi des données électromagnétiques, des données électromagnétiques à source commandée, des données sismiques, des données de gravité ou des données de résistivité électrique.

**8.** Procédé selon la revendication 6 ou 7, dans lequel la matrice de covariance est de la forme :

$$\overleftrightarrow{\mathbb{C}}^{-1} = f(\overleftrightarrow{\mathbb{C}}^{-1}, \alpha\overleftrightarrow{F}).$$

**9.** Procédé selon l'une quelconque des revendications 6 à 8, dans lequel la matrice de covariance est de la forme :

$$\overleftrightarrow{\mathbb{C}}^{-1} = \overleftrightarrow{\mathbb{C}}^{-1}\left(\overleftrightarrow{1} + \alpha\overleftrightarrow{F}\right)$$

**10.** Procédé selon l'une quelconque des revendications 5 à 9, dans lequel l'anomalie peut être un quelconque parmi des paramètres, des propriétés ou des régions/parties d'un modèle.

**11.** Programme informatique comprenant des instructions qui, lorsque le programme est exécuté par un ordinateur, forcent l'ordinateur à mettre en œuvre le procédé selon l'une quelconque des revendications 1 à 10.

**12.** Appareil de traitement de données comprenant un moyen pour mettre en œuvre le procédé selon l'une quelconque des revendications 1 à 10.

**13.** Support de données pouvant être lu par ordinateur sur lequel est stocké le programme informatique selon la revendication 11.

**14.** Transmission à travers un réseau d'un programme tel que revendiqué selon la revendication 11.

Figure 1

Figure 2

Figure 3

Figure 4

Figure 5

Figure 6

Figure 7

Figure 8

Figure 9

| |
|---|
| S1. Receiving geophysical data acquired from a subsurface region |

$\downarrow$

| |
|---|
| S2. Determining data points which have high sensitivity to an anomaly |

$\downarrow$

| |
|---|
| S3. Performing an inversion based on said data points, wherein during inversion focusing towards the anomaly is achieved by increasing the weight of said data points. |

$\downarrow$

| |
|---|
| S4. Determining at least one model of the distribution of a physical property in the subsurface region |

Figure 10

EP 3 341 767 B1

S5. Receiving geophysical data acquired from a subsurface region

S6. Determining data points which have low sensitivity to an anomaly

S7. Performing an inversion based on said data points, wherein during inversion focusing towards the anomaly is achieved by decreasing the weight of said data points.

S8. Determining at least one model of the distribution of a physical property in the subsurface region

Figure 11

Figure 12

EP 3 341 767 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **TARANTOLA, A.** Inverse Problem Theory. Elsevier, 1987
- **TARANTOLA, A.** Inverse Problem Theory and Methods for Model Parameter Estimation. Society for Industrial and Applied Mathematics, 2005
- **ZHDANOV, M. S.** Geophysical Inverse Theory and Regularization Problems. Elsevier, 2002
- **MORTEN, J. P. ; BJØRKE, A. K. ; STØREN T.** CSEM data uncertainty analysis for 3D inversion. *SEG Expanded Abstracts 28,* 2009, 724
- **R-E PLESSIX.** Resistivity imaging with controlled-source electromagnetic data: depth and data weighting. *Inverse problems,* 23 May 2008, vol. 24

- **MAAØ, F. A. ; NGUYEN, A. K.** Enhanced subsurface response for marine CSEM surveying. *Geophysics,* 2010, vol. 75 (3), 7-10
- **NGUYEN, A. K. ; KJØSNES Ø. ; HANSEN J. 0.** CSEM exploration in the Barents Sea, Part II - High resolution CSEM inversion. *75th Annual Conference and Exhibition, EAGE, Extended Abstracts,* 2013, We0403
- **MAAØ, F. A.** Fast finite-difference time-domain modeling for marine-subsurface electromagnetic problems. *Geophysics,* 2007, vol. 72, A19-23
- **ZACH, J. J. ; BJØRKE, A. K. ; STØREN, T. ; MAAØ, F.** 3D inversion of marine CSEM data using a fast finite-difference time-domain forward code and approximate hessian-based optimization. *SEG Expanded Abstracts 27,* 2008, 614